Europäisches Patentamt

European Patent Office

Office européen des brevets

(19)

(11) **EP 0 704 711 B1**

(12) # EUROPEAN PATENT SPECIFICATION

(45) Date of publication and mention
of the grant of the patent:
**14.06.2000 Bulletin 2000/24**

(51) Int Cl.⁷: $G01S\ 3/786$, $G06T\ 7/20$

(21) Application number: **95306867.3**

(22) Date of filing: **28.09.1995**

(54) **Digital image processing apparatus**

Gerät zur digitalen Bildverarbeitung

Appareil de traitement numérique d'image

(84) Designated Contracting States:
**DE DK FR GB IT SE**

(30) Priority: **30.09.1994 GB 9419909**

(43) Date of publication of application:
**03.04.1996 Bulletin 1996/14**

(73) Proprietor: **BRITISH AEROSPACE PUBLIC
LIMITED COMPANY
Farnborough, Hants. GU14 6YU (GB)**

(72) Inventors:
• **Isaacs, Barry, British Aerospace Syst.Equip.Ltd.
Plymouth, Devon PL6 6DE (GB)**

• **Pooley, Mike, British Aerospace Syst.Equip.Ltd.
Plymouth, Devon PL6 6DE (GB)**

(74) Representative: **Rooney, Paul Blaise et al
British Aerospace plc,
Corporate Intellectual Property Department,
Park East, PO Box 87, Farnborough Aerospace
Centre
Farnborough, Hants GU14 6YU (GB)**

(56) References cited:
**FR-A- 2 073 232     GB-A- 2 067 744
US-A- 4 220 967     US-A- 4 227 212**

**Description**

This invention relates to digital image processing apparatus for correlating a two-dimensional reference image over a series of positions in an input image.

Such apparatus is typically used in a correlation tracker which functions by comparing each frame of video data with a small rectangular "reference image" of the object being tracked. The correlator finds the position in the current image where the reference image best matches the current video image. This position data is used to cause the tracker to "follow" the object and may also be used to provide navigational data to allow the object to be intercepted. Correlation trackers such as this are known but there is a substantial delay between scanning or read out of the digital image data for a TV field and completion of the correlation operation. This can slow operation of the tracker and makes it difficult to adapt the various parameters of the correlation in accordance with the results of the correlation. Thus a need exists for a correlation tracker which is capable of providing correlation data for a TV field in near real time, so that the correlation operation can be carried out between TV fields. A need also exists for a correlation tracker in which the reference image and various parameters associated therewith, such as the weighting of the pixels making up the reference image, the size and shape of the reference image and the degree of confidence or the speed of adaptation to new reference values, may be varied in accordance with correlation data and associated parameters determined by the tracker.

US-A-4,227,212 discloses an adaptive updating processor for use in an area correlation video tracker in which a reference subarray of picture elements acquired from a selected track window array of picture elements of an acquisition video frame is cross-correlated in accordance with a predetermined metric function with the picture elements of the selected track window array of each of a number of video frames generated subsequent to the acquisition video frame. An adaptive threshold processor performs auto correlations in accordance with the predetermined metric function to derive reference threshold correlation and threshold correlation values.

We have designed a correlator which is capable of correlating a two-dimensional reference image against every possible position in a raster scanned image, producing a correlation surface for the entire image field, with virtually zero delay from receipt of the last pixel of the image field. The reference image can be completely changed during the flyback interval, and each pixel of the reference image can be weighted, to lower its contribution to the overall correlation sum, or turned off completely. This allows the reference image to assume shapes other than rectangular, e.g., a doughnut-shaped ring reference image can be selected.

The correlator architecture, by virtue of its very high speed of operation, and by incorporation of the reference image pixel weighting, allows an ASIC implementation, in association with a suitable high performance digital signal processor, to be used for full field correlation (with complete reference image update during flyback), and for limited field advanced correlation techniques.

Accordingly, this invention provides digital image processing apparatus for correlating a reference image with an input image at a plurality of correlation positions and for determining a position of best registration thereof, including

image data input means for receiving digital data representing the pixel values of said input image;

a processing cell connected to said image input means for receiving data therefrom;

means for storing a respective reference value representing the value of an associated pixel in the reference image; and

means for performing a correlation operation on the reference value stored in the processing cell and the input image data supplied to the processing cell to determine partial correlation data;

characterised by a series of processing cells connected one to another and to said image input means for receiving data therefrom substantially in parallel, each processing cell including:-
partial correlation data output means for outputting partial correlation data, wherein each processing cell downstream of the first cell in the series includes partial correlation data input means for receiving the partial correlation data from the previous cell, and the last processing cell in the series has correlation data output means for outputting a stream of digital correlation data indicating the degree of correlation at each of the correlation positions.

Preferably the apparatus includes means responsive to said stream of digital correlation data for determining the position of best registration of the reference image with the input image.

The correlation operation in each processing cell preferably includes determining the absolute difference between the image data value input to that cell and the reference value for that cell. The correlation operation preferably further includes combining or summing said absolute difference with the partial correlation data received from the upstream processing cell, to form partial correlation data for output to the downstream processing cell. Each processing cell preferably includes means for storing a respective correlation weighting value associated with said cell, and means for weighting or multiplying said absolute difference value with said correlation weighting value. The respective correlation weighting values of the processing cells are preferably modified in accordance with at least one of:-

(i) the current values of the pixels in the best registration array defined by that part of the image corresponding to the reference image at the position of best registration;

(ii) the pixels in the reference image, and

(iii) the current pixels in arrays of similar size and adjacent to the best registration array.

Each processing cell preferably includes latch means or other delay means for applying a predetermined delay to the partial correlation data supplied to the downstream processing cell.

Preferably the values of the input image pixels in the best registration array are used to modify the values of the corresponding pixels of the reference image.

Said modification preferably includes modifying the values of the pixels of the reference image in accordance with the values of the corresponding pixels in the best registration array, and in accordance with a respective reference weighting value for each pixel. Each reference weighting value may be determined using the absolute difference between the pixel values of the reference image and the pixel values of the best registration array.

Whilst the invention has been described above, it extends to any inventive combination of the features set out above or in the following description.

The invention may be performed in various ways and, by way of example only, various embodiments and modifications thereof will now be described in detail, reference being made to the accompanying drawings, in which:-

Figure 1 is a schematic diagram representing a 3 x 3 convolver architecture;

Figure 2 is a schematic diagram representing an inverted 3 x 3 correlator architecture in accordance with this invention;

Figure 3 is a schematic diagram of a correlator in accordance with the invention made up of m rows of n cells;

Figure 4 is a block diagram illustrating a processing cell for the correlator of Figure 3;

Figure 5 is a block diagram of an application specific integrated circuit (ASIC) providing 2 lines of 32 processing cells.

Figure 6 shows the general area used to calculate the values of the ACwt array;

Figure 7 shows the two areas used in the correlation calculation and the region of overlap between the two;

Figures 8(a) and (b) show two examples where the correlation minimum rectangle is near two boundaries of the full field of view; and

Figure 9 is a schematic diagram of an embodiment of correlator tracker incorporating an eight ASIC correlator.

A digitised raster scanned monochrome image (video) consists of a stream of data words (corresponding to the pixel intensities of the source image or scene), a pixel clock, and line and field synchronisation pulses. The image or scene is scanned line by line, left to right and top to bottom. A correlator operates on this data stream in a similar manner to a two-dimensional convolver, using a variation on already well established techniques. The correlator differs from these by virtue of its size, which is very much larger than previously available convolvers ($32 * 16$ array size, compared with $9 * 9$ typical maximum array size), and its basic cell structure, which is designed to implement a weighted difference correlation algorithm to be described in further detail below.

The description of the mode of operation of the correlator assumes that the image data consists of 512 pixels per line. The pixel clock rate, and the number of lines in the image are not important for this description. The pixel data is eight bits, i.e. 256 grey levels. The correlator reference image is assumed to be a maximum of $32 * 16$ pixels (512 in total), but may be larger due to the expandable architecture.

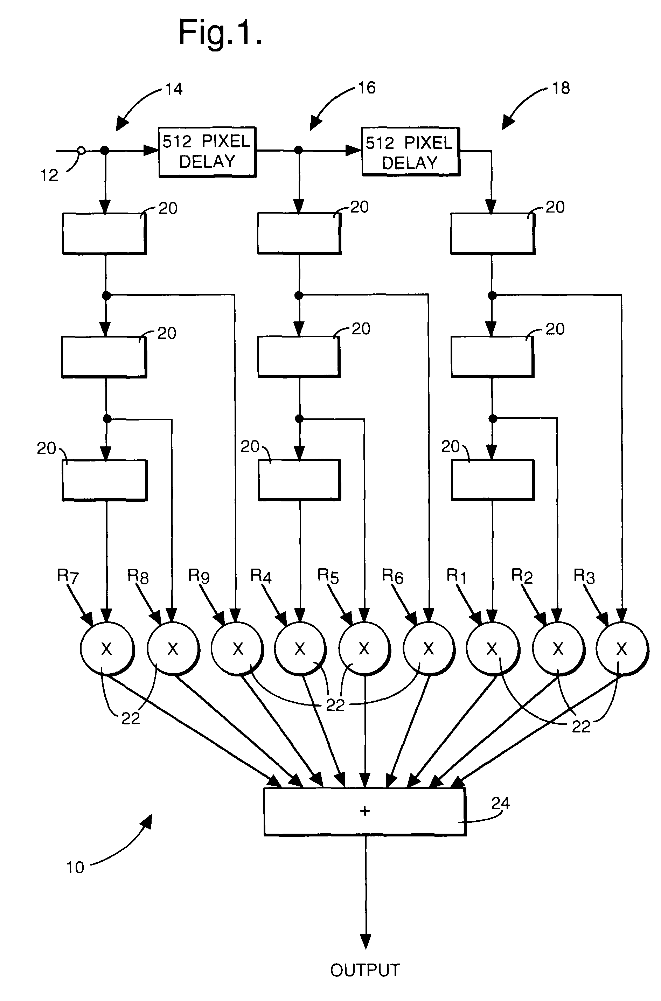

A conventional $3 * 3$ convolver architecture 10 is shown in Figure 1. Image data enters the convolver at the top left, 12, and is separated into three line channels, 14, 16, 18, by the 512 stage delays. Each channel consists of three delay stages, 20, where each delay is equal to one cycle of the pixel clock. The image data has thus been manipulated so that all 9 pixels which are required for the convolution operation are available simultaneously at the outputs of the nine delay states. Nine multipliers, 22, and a single adder, 24, complete the convolver. Note that the adder, 24, is required to add nine numbers, each greater than eight bits (when multiplied).

The 32 * 16 correlation function could be implemented in a similar manner, replacing the 3 channels by 16 channels each comprising 32 delay states. 512 differencers would replace the 9 multipliers, and the adder would be required to add 512 eight bit numbers. This latter requirement would result in a lengthy delay through the system, and extensive hardware for generating the sum.

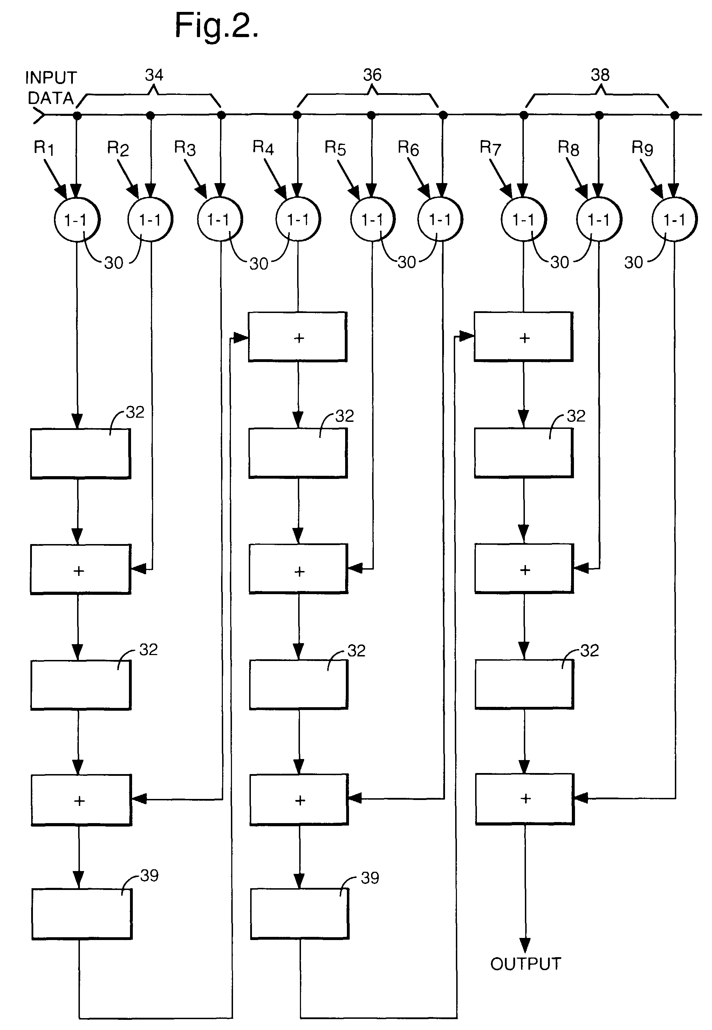

Referring to Figure 2, we have found that the basic convolver architecture can be reversed, so that the image data is fed simultaneously to all of the differencers, 30, and the 9 delays, 32, similarly organised into 3 channels, 34, 36, 38, each 2 delays long, with line delays 39, between channels, are used to shift partial sums of the final addition between differencers. It will readily be seen that this architecture may be extended to provide a 32 * 16 correlation operation with 512 absolute differences, and with 16 channels each with 32 delay stages with appropriate line delays between each channel.

The principal advantage obtained from this inverted architecture is that the addition process becomes distributed and need not contribute to the overall delay through the system. Advantage is taken of this in the correlator design to minimise the delay from arrival of the last pixel of the image to outputting of the last value of correlation to 2 pixel clock cycles.

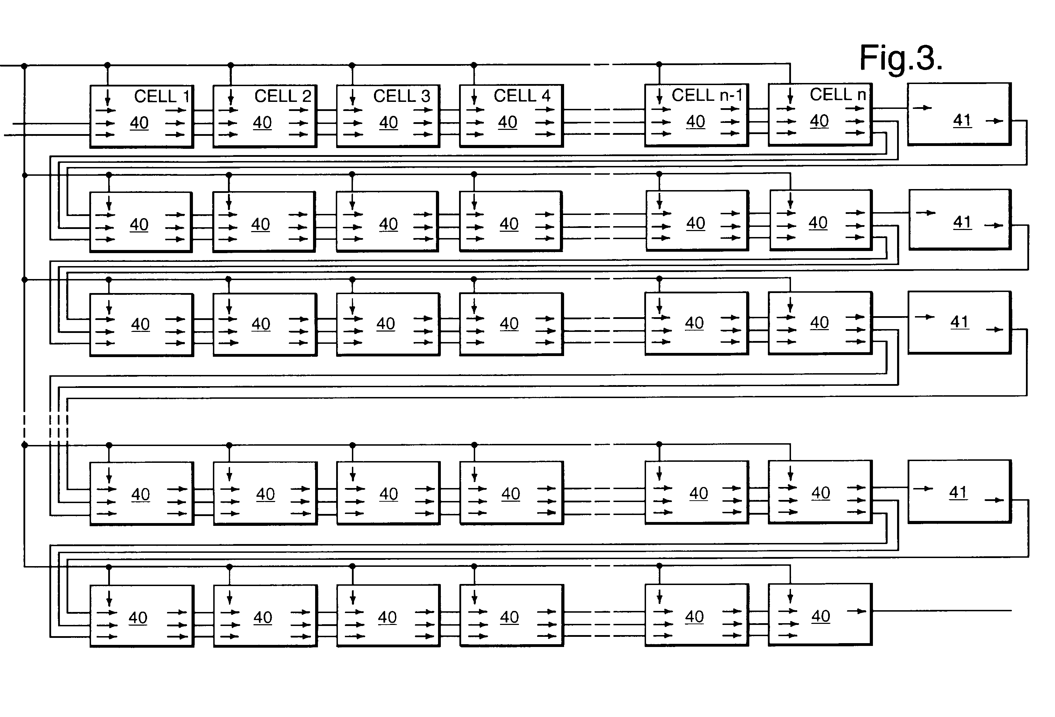

Referring to Figure 3 this shows a correlator in accordance with the invention for correlating an m x n reference image with an input image, illustrating the interconnection between the processing cells 40. In brief, the processing cells are connected up in $m$ lines of n cells, the nth cell in each line being connected via a line store 41 to the first cell in the next line. The pixel data is fed to each cell 40 in parallel and there are lines for clocking in the respective reference data values and correlation weight values into each cell. The output of the last processing cell 40 provides the aggregate value of all the partial correlation sums calculated by the processing cells and provides a first correlation value for being stored in the correlation map, the correlation values collectively representing a correlation surface. The correlation values provide a measure of the correlation between the reference image and the input image for respective overlaps of the reference and input image, with a low value indicating good correlation.

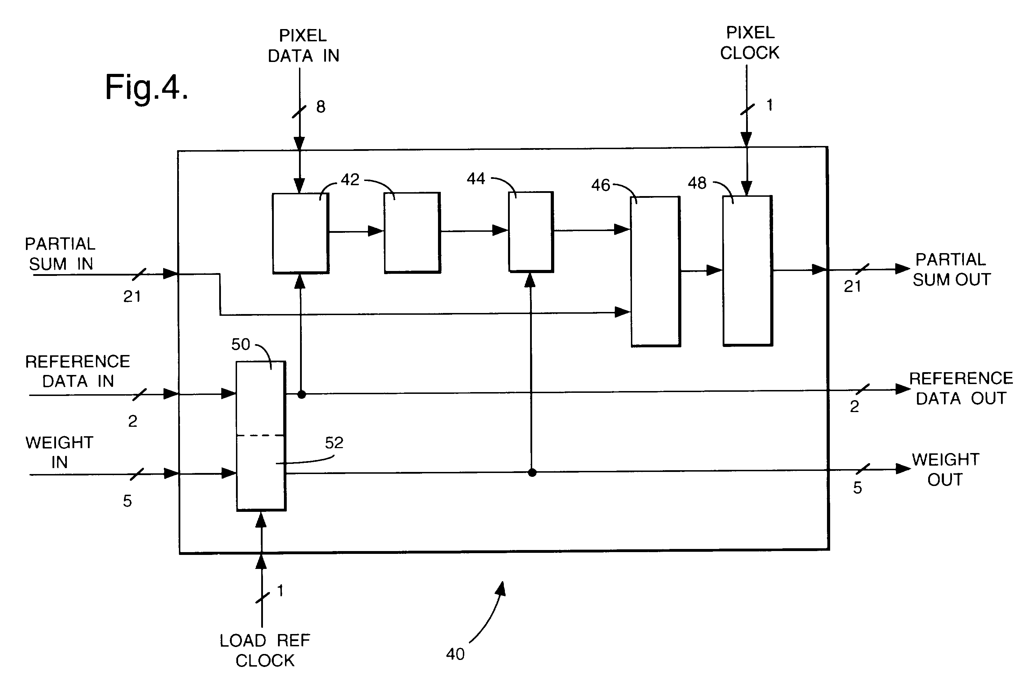

A processing cell is shown in Figure 4. This comprises an 8 bit absolute differencer, 42, a multiplier, 44 and a partial sum adder, 46. The partial sum output to the next cell is delayed by a register 48 for one pixel clock cycle. Also within the cell are registers 50, 52 for holding the reference image pixel data and a multiplication factor (AC weight). In the present implementation, for reasons of minimising complexity, the multiplication factor values are limited to the values 1, 1/2, 1/4, 1/8, 1/16, 1/32, as well as 0, corresponding to the cell being switched off (i.e. not contributing to the overall correlation sum). The reference data register, 50 and weight factor register, 52 have their inputs connected to the outputs of the equivalent registers in the preceding cell. This is done so that the entire 512 bytes of the reference and 512 weight factor values can be loaded into the cells in series through a single parallel port. Similarly the reference data and weight data can be read out of the system through a similar port, and thus the registers can act as read/write stores for an external process requiring access to the data. The clock used for loading the registers is completely separate from the video data clock so that if required the reference and weight data can be changed at any time without stopping the video data flow.

The main requirement for the differencing correlator is to search for the best match between the reference and the image data. This corresponds to the lowest correlation sum. Consequently a minimum detector at the output of the correlator will indicate when the last best match was located, and if the line number and pixel clock cycles into that line of the image are recorded when the minimum occurs, the best fit part of the image can be subsequently examined.

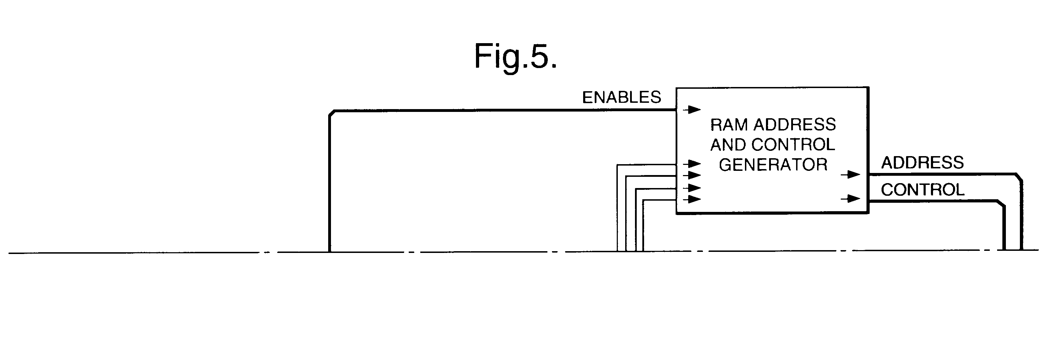

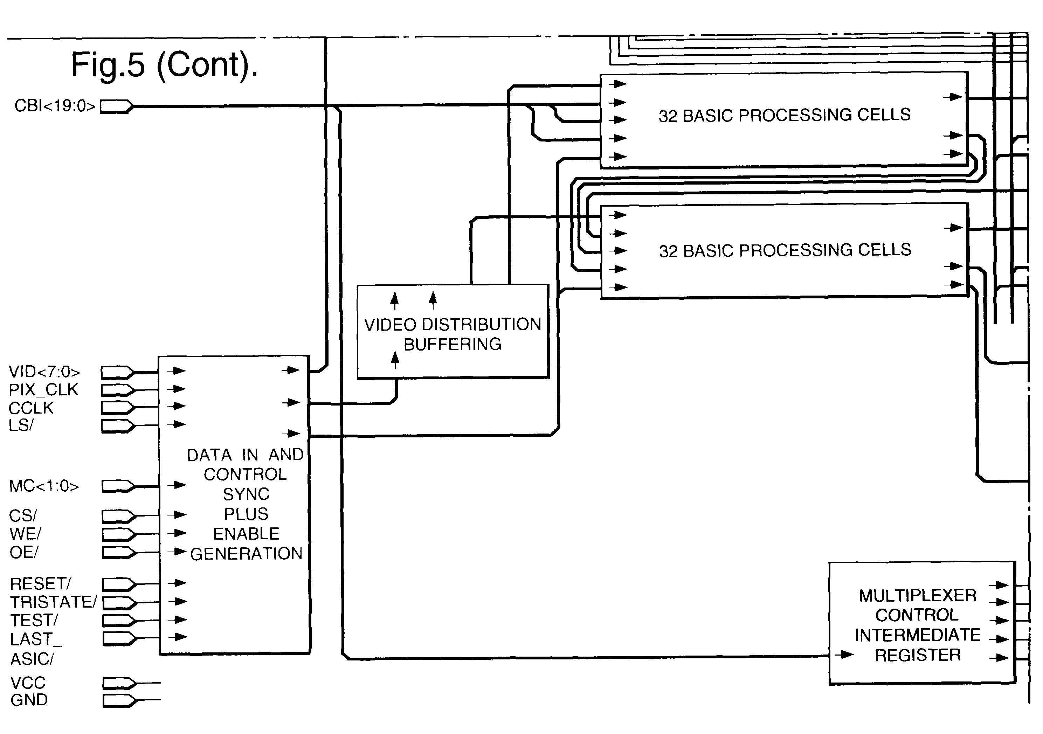

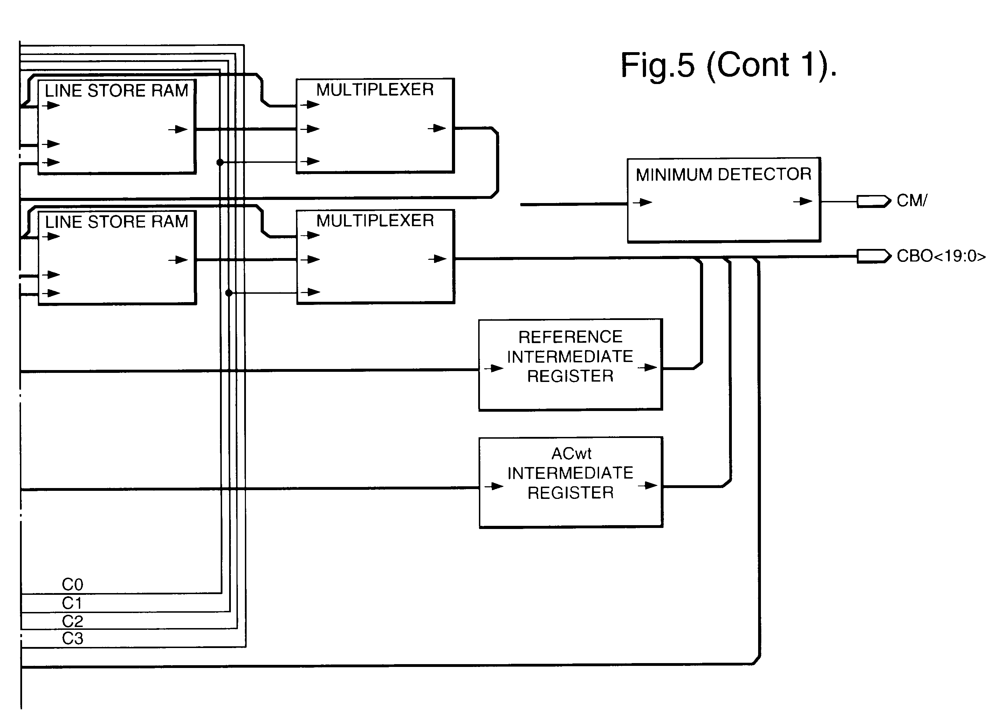

Figure 5 illustrates an ASIC providing 64 differencing cells, in 32 * 2 array, with two line delays on a single ASIC, but the full 32 * 16 array can be achieved simply by connecting ASICs in series, in exactly the same manner as the cells are internally connected within each ASIC. This ability to extend the array size is not limited to 32 * 16.

The array of processing cells described above provides correlation data in near real time, so that the correlation values making up the correlation surface over the search area are available within a few pixel clock cycles of the last relevant pixel from that area of the image currently being correlated with the reference image. This means that the correlation minimum, i.e. the precise location of the best registration between the reference image and the image input can be determined in the flyback time before the data from the next TV field arrives. Within this time the reference image and the correlation weights may be updated in accordance with the data from the immediately previous TV field, as to be described.

The correlation tracker will be a sub-system of a larger tracking system. It will search for matches between a Reference image and an area of the incoming real time video data, the Search area, and provide real time tracking information, ie target co-ordinates and tracking quality values. It will be possible to load the Reference array from an area of the incoming video data - target designation operation, or to load it from pre-recorded images - target acquisition.

The correlation function is a pixel by pixel comparison - differencing - of the Reference image and a same size area of the Search area. The correlation calculation involves additional information to the Reference and Search arrays. During the correlation calculation each pixel comparison is factored by a 'weight' obtained from a data area called the ACwt array. This array is the same size as the Reference array and has a direct pixel to pixel correspondence with it. The contents of the ACwt array are preset at the start of the track such that each value is a maximum. The individual values within the ACwt array vary field by field as the track continues. The variation of each individual entry depends on the image surrounding the located match for the Reference array, field by field. An example of a technique for doing this is given below.

Each correlation calculation is defined as :-

$$\sum_{(i=1:32,\ j=1:16)} ACwt[i,j] * abs(pres[i,j] - ref[i,j])$$

where

'i'      is the pixel counter to process the array.
'j'      is the line counter to process the array.
'ACwt'   is the scaling value for the pixel [i,j].
'pres'   is the present array, grey scale values from the Search Array corresponding to the [i,j] position of the overlapping Reference Array.
'ref'    is the grey scale value from the Reference Array at position [i,j].

The calculation is performed for each possible overlap of the Reference Array and Search Array producing a Correlation Sum Array or correlation surface. The best correlation match corresponds to the location of the minimum value.

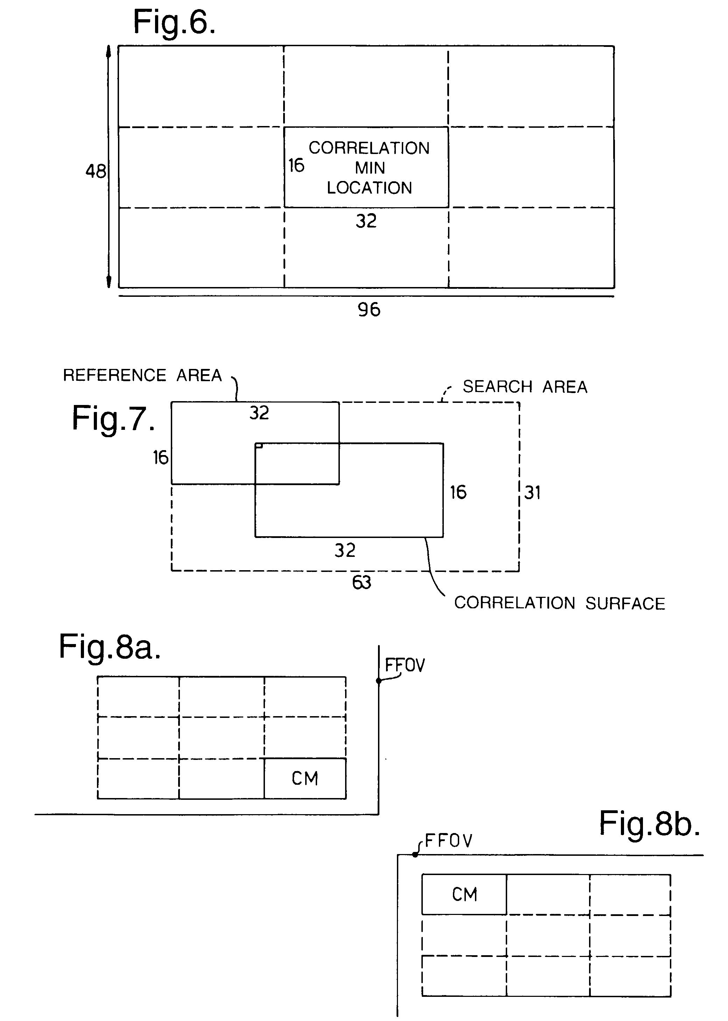

On completion of a correlation run the results are available to the controlling processor and the Reference Array is updated to take account of the variation between the original Reference and the located target as the image changes. The Reference Array update is performed by combining a fraction of the original array with the reciprocal fraction of the located target image. The fraction, 'weight', values are obtained from the ARwt array. This array is the same size as the Reference Array and has a direct correspondence with it. The contents of this array are preset at the start of the track such that each value is a minimum. The values within the ARwt array vary field by field as the track continues. The variation of each individual entry depends on the difference between the values in the Reference Array and the corresponding values in the Reference Array sized area defined by the detected correlation minimum (see Figure 6). An example of a technique for calculating the ARwt values is given below.

A typical sequence of correlation tracking is as follows:-

STEP/      ACTION

0/ The correlator is in idle waiting for start co-ordinates from the main system. Each of the values in the ACwt array is set to maximum and each of the values in the ARwt array is set to minimum.

1/ The main system defines the co-ordinates of the target area, which also defines the first search area.

2/ The correlator constantly stores the incoming video data in a field store. After receiving target co-ordinates the correlator loads the Reference array from the designated area of the field store.

3/ On the next field the correlator performs the correlation calculations over the Search area producing a Correlation Sum Array.

4/ The following data is used by the correlator tracker system.

a) Location and value of the correlation minimum, to define the co-ordinates of the Search area in the next field and to define the field area to be used to modify the Reference array.

b) The correlation values of the four locations, North, East, South and West of the detected minimum.

c) The centroid of the Reference Array.

d) The centroid of the Reference Array sized area within the current field defined by the correlation minimum position.

e) The average value of the Reference Array grey value.

f) The average value of the Reference Array sized area within the current field defined by the correlation minimum position.

The data in b) to f) inclusive are used to produce track quality values, ie how well the located object matches the required object. If the quality value is low then the tracker may be allowed to coast, and the ACwt, ARwt, and Reference arrays are not updated - go to step 6.

g) Location and value of the second best correlation minimum, to be used for possible decoy evasion.

5/ If the track quality is high the location of the detected correlation minimum is used to update the ACwt and ARwt arrays.

6/ Using the new ARwt array and the newly located correlation minimum update the Reference Array.

7/ The controlling processor defines the next field position of the Search area.

8/ Go to step 3.

Figure 7 shows an example of the two areas used in the correlation calculation and the region of overlap between the two. The Search Area defines the sub region of the FFOV (Full Field of View) over which the Reference Area is passed. The Search Area may extend beyond the boundaries of the FFOV but the Reference Area may not. Image data defined by the Search Area but overlapping the FFOV shall not be processed. The result is a Correlation Area occupying the same size and image position as the Search Area. 512 valid correlations are performed, 32 pixels $* 16$ lines, in this example.

The Search Area in this example is 16 lines of 32 pixels. During each field correlation this area is nominally centred around the expected position of the target, there is no true centre to a 32x16 area. The position of this search area is defined by the controlling processor at the start of each field's processing.

The Reference Area is 16 lines of 32 pixels. It contains a record of the image to be searched for within the Search Area. The contents of the Reference Area may be modified field by field as the target image changes, see below. At the start of the correlation sequence, designation or acquisition, the Reference Array is loaded by the correlator from the incoming image data at a location defined by the controlling processor or from a pre-recorded image list.

Referring again to Figure 6, this shows the general area used to calculate the values of the ACwt array. The Correlation Minimum (CM) location is an area the size of the Reference Array located at the detected correlation minimum for the current field, ie after the correlation process is complete. The image area used to calculate the change in ACwt value is equivalent to 8 similar areas surroundng the Correlation Minimum location.

In the general case the position of the detected correlation minimum will not be near the FFOV boundary and the indicated data area is used. If the correlation minimum should approach the FFOV boundary such that some of the surrounding areas would extend beyond the boundary then the image area used is modified. The area is always equivalent to 8 additional array areas but they are located differently with respect to the correlation minimum.

Figure 8(a) and (b) shows two examples where the located Correlation Minimum approaches the FFOV boundaries causing the required surrounding areas to overlap the boundaries, left and top in a) and right and bottom in b). It is also possible that only a single boundary is crossed in which case CM occupies one of the central locations of the group of nine array areas.

As mentioned above, the image data area required to update the ACwt and ARwt arrays is the image data in the position of the newly found correlation minimum and the 8 similar areas located around it as allowed by the position of the correlation minimum within the FFOV, see Figures 7 and 8.

An example of an update process is as follows.

1/ A temporary array, 16 lines of 32 pixels, is produced. Each entry is the average of the sum of the absolute differences between the reference array and the 8 areas surrounding the correlation minimum minus the absolute difference between the reference array and the correlation minimum array. The temp entries are signed and may contain binary fractions.

$$temp[i,j] = \{Sum(k=1:8)\; abs(Ak[i,j]-ref[i,j])\}/8$$

$$- abs(cm[i,j]-ref[i,j])$$

where

i = temp array pixel value.
j = temp array line value.
A = one of the data areas surrounding the correlation minimum.
cm = the correlation minimum array.
ref = the reference array.

2/ The temp array maximum, average, and minimum values are noted.

3/ The temp array is further modified as follows. For each entry in the array

If temp[i,j] < average value then

$$temp[i,j] = (temp[i,j]-average) / (average-minimum)$$

else If temp[i,j] >= average value then

$$temp[i,j] = (temp[i,j]-average) / (maximum-average)$$

4/ The ACwt array is then updated as follows, the ACwt array truncates the effects of the fractions in the temp array.

$$ACwt[i,j] = temp[i,j] + ACwt[i,j]$$

The individual entries of the ACwt array allow long term object features to accentuated and short term features, ie crossing or short duration decoys, to be ignored. Pixel locations not associated with long duration features tend to have low values and contribute small amounts to the correlation sum.
The way in which the ARwt values are calculated will now be described.
The ARwt array is updated using data from the reference array and the scene data at the position of the detected correlation minimum. The update process is as follows.

1/ A temporary array, 16 lines of 32 pixels, is produced. Each entry is the absolute difference between the reference array and the correlation minimum array.

$$temp[i,j] = abs(cm[i,j]-ref[i,j])$$

where
cm is the correlation minimum array.

2/ The temp array maximum, average, and minimum values are noted. The average can contain a binary fraction.

3/ The temp array is further modified as follows. For each entry in the array

If temp[i,j] < average value then

$$temp[i,j] = (average-temp[i,j]) / [2*(average-minimum)]$$

else If temp[i,j] >= average value then

$$temp[i,j] = (average-tempi,j]) / (maximum-average)$$

4/ The ARwt array is then updated as follows.

$$ARwt[i,j] = temp[i,j] + ARwt[i,j]$$

The individual entries of the ARwt array allow long term object features to persist in the reference record. Short term features, ie crossing or short duration decoys, are ignored.
On completion of the ARwt update the Reference Array can be updated as follows:-

$$ref[i,j] = (ARwt[i,j]*cm[i,j]) + (1-ARwt[i,j]*ref[i,j])$$

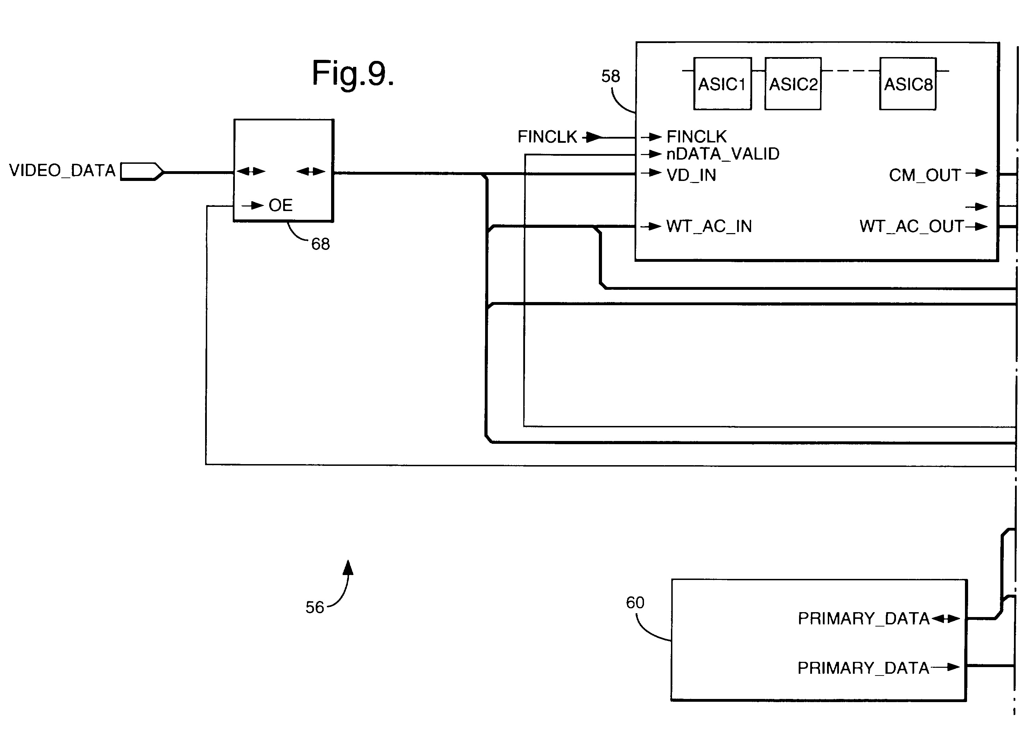

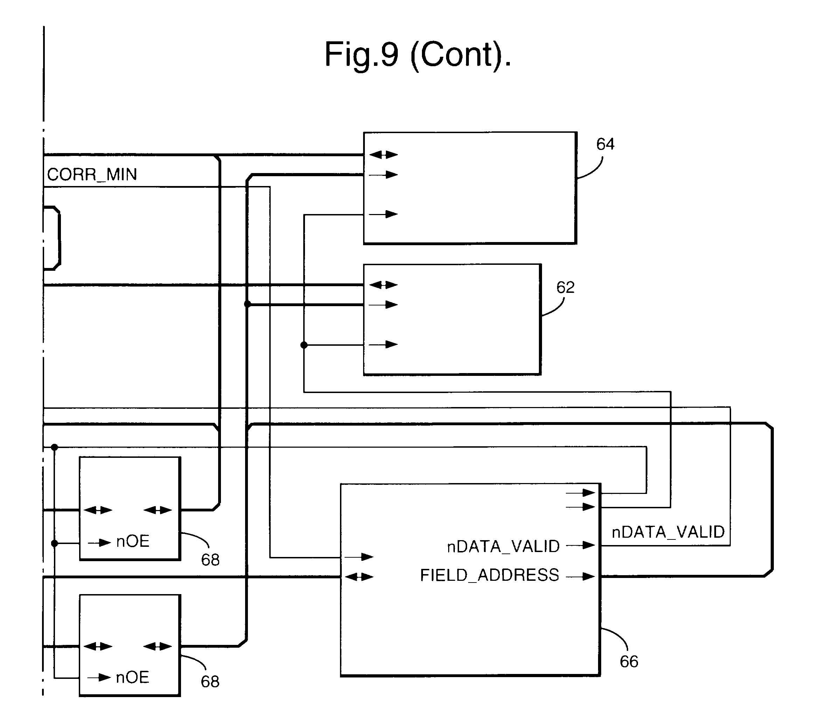

The hardware for the correlator may be implemented in various ways, but we have designed a correlator made up of 8 similar ASICS, each ASIC comprising 2 lines of 32 processing cells, the ASICS being connected in series to provide acorrelator capable of storing a reference array of 16 lines of 32 pixels each. The input of pixel data, the transfer of partial correlation data between cells and lines, and the clocking of Reference Data and correlation weighting data into the respective processing cells, is carried out in a similar manner to that indicated in relation to Figure 5.
An example of a correlator tracker 56 incorporating a multiple (8) ASIC correlator 58 is shown in Figure 9.
The various processing steps for updating the reference data and correlation weighting data and for detailing the co-ordinates of the tracked object within the input image are implemented by a digital signal processor 60. The correlator also includes a field data store 62 which stores each video field frame for use in the various updating steps described above, a correlation map store 64 for storing the correlation values making up the correlation map, together with a field control 66 and buffers 68.

## Claims

1.  Digital image processing apparatus (10) for correlating a reference image with an input image at a plurality of correlation positions and for determining a position of best registration thereof, including

    image data input means (12) for receiving digital data representing the pixel values of said input image;

    a processing cell (40) connected to said image input means (12) for receiving data therefrom,

    means (50, 52) for storing a respective reference value representing the value of an associated pixel in the reference image; and

    means for performing a correlation operation on the reference value stored in the processing cell (40) and the input image data supplied to the processing cell (40) to determine partial correlation data;

    characterised by a series of processing cells (40) connected one to another and to said image input means (12) for receiving data therefrom substantially in parallel, each processing cell including:-
    partial correlation data output means for outputting partial correlation data, wherein each processing cell (40) downstream of the first cell in the series includes partial correlation data input means for receiving the partial correlation data from the previous cell, and the last processing cell (40) in the series has correlation data output means for outputting a stream of digital correlation data indicating the degree of correlation at each of the correlation positions.

2.  Digital image processing apparatus according to Claim 1, including means responsive to said stream of digital correlation data for determining the position of best registration of the reference image with the input image.

3.  Digital image processing apparatus according to Claim 1 or 2, wherein the correlation operation in each processing cell (40) includes determining the absolute difference between the image data value input to that cell (40) and the reference value for that cell (40).

4.  Digital image processing apparatus according to Claim 3, wherein said correlation operation further includes combining or summing said absolute difference with the partial correlation data received from the upstream processing cell (40), to form partial correlation data for output to the downstream processing cell (40).

5. Digital image processing apparatus according to Claim 3 or Claim 4, wherein each processing cell (40) includes means for storing a respective correlation weighting value associated with said cell (40), and means for weighting or multiplying said absolute value with said correlation weighting value.

6. Digital image processing apparatus according to Claim 5, including means for modifying each of the respective correlation weighting values of the cells (40) in accordance with a least one of:-

   (i) the current values of the pixels in the best registration array defined by that part of the image corresponding to the reference image at the position of best registration,

   (ii) the pixels in the reference image, and

   (iii)the current pixels in arrays of similar size and adjacent to the best registration array.

7. Digital image processing apparatus according to any preceding Claim, where in each processing cell (40) includes latch means (48) or other delay means for applying a predetermined delay to the partial correlation data supplied to the downstream processing cell (40).

8. Digital image processing apparatus according to any preceding Claim, wherein the values of the input image pixels in the best registration array are used to modify the values of the corresponding pixels of the reference image.

9. Digital image processing apparatus according to Claim 8, wherein said modification includes modifying the values of the pixels of the reference image in accordance with the values of the corresponding pixels in the best registration array, and in accordance with a respective reference weighting value for each pixel.

10. Digital image processing apparatus according to Claim 8, wherein each reference weighting value is determined using the absolute difference between the pixel values of the reference image and the pixel values of the best registration array.

**Patentansprüche**

1. Gerät (10) zur digitalen Bildverarbeitung zur Korrelation eines Bezugsbildes mit einem Eingangsbild an mehreren Korrelationspositionen und zur Bestimmung einer Position der besten Ausrichtung hiervon, mit den folgenden Merkmalen:

   - eine Eingabeeinrichtung (12) für die Bilddaten zum Empfang digitaler Daten, welche die Pixelwerte des Eingangsbildes repräsentieren,

   - eine Verarbeitungszelle (40), die mit der Bildeingabeeinrichtung (12) verbunden ist, um von dieser Daten zu empfangen,

   - Mittel (50, 52) zur Speicherung eines jeweiligen Bezugswertes, der den Wert eines zugeordneten Pixels in dem Bezugsbild repräsentiert, und

   - Mittel zur Durchführung einer Korrelationsoperation an dem Bezugswert, der in der Verarbeitungszelle (40) gespeichert ist, und an den Eingangsbilddaten, die der Verarbeitungszelle (40) zugeführt werden, um partielle Korrelationsdaten zu bestimmen,

   gekennzeichnet durch eine Reihe von Verarbeitungszellen (40), die miteinander und mit der Bildeingabeeinrichtung (12) verbunden sind, um hiervon Daten im wesentlichen parallel zueinander zu erhalten, wobei jede Verarbeitungszelle folgende Mittel aufweist:

   - partielle Korrelationsdaten-Ausgabemittel zur Ausgabe partieller Korrelationsdaten, wobei jede Verarbeitungszelle (40) stromab der ersten Zelle in der Reihe partielle Korrelationsdaten-Eingabemittel aufweist, um die partiellen Korrelationsdaten von der vorhergehenden Zelle zu empfangen, und wobei die letzte Verarbeitungszelle (40) in der Reihe Korrelationsdaten-Ausgabemittel aufweist, um einen Strom von digitalen Korrelationsdaten auszugeben, die das Ausmaß der Korrelation an jeder der Korrelationspositionen anzeigen.

EP 0 704 711 B1

**2.** Gerät zur digitalen Bildverarbeitung nach Anspruch 1, bei welchem Mittel vorgesehen sind, die auf den Strom der digitalen Korrelationsdaten ansprechen, um die Position der besten Ausrichtung des Bezugsbildes mit dem Eingabebild zu bestimmen.

**3.** Gerät zur digitalen Bildverarbeitung nach den Ansprüchen 1 oder 2, bei welchem die Korrelationsoperation in jeder Verarbeitungszelle (40) den Schritt umfaßt, die absolute Differenz zwischen der Bilddatenwerteingabe nach jener Zelle (40) und dem Bezugswert für jene Zelle (40) zu bestimmen.

**4.** Gerät zur digitalen Bildverarbeitung nach Anspruch 3, bei welchem die Korrelationsoperation weiter den Schritt umfaßt, die absolute Differenz mit den partiellen Korrelationsdaten zu kombinieren oder zu summieren, die von der stromaufwärtigen Verarbeitungszelle (40) empfangen werden, um partielle Korrelationsdaten zur Ausgabe an die stromabwärtige Verarbeitungszelle (40) zu liefern.

**5.** Gerät zur digitalen Bildverarbeitung nach den Ansprüchen 3 oder 4, bei welchem jede Verarbeitungszelle (40) Mittel aufweist, um einen jeweiligen Korrelationsbewertungswert zu speichern, der der Zelle (40) zugeordnet ist, wobei Mittel vorgesehen sind, um den Absolutwert mit dem Korrelationsbewertungswert zu bewerten oder zu multiplizieren.

**6.** Gerät zur digitalen Bildverarbeitung nach Anspruch 5, bei welchem Mittel vorgesehen sind, um jeden jeweiligen Korrelationsbewertungswert der Zellen (40) gemäß wenigstens einer der folgenden Maßnahmen zu modifizieren:

(i) die Augenblickswerte der Pixel in dem Feld bester Ausrichtung, die durch jenen Teil des Bildes definiert sind, der dem Bezugsbild an der Position der besten Ausrichtung entspricht,

(ii) die Pixel in dem Bezugsbild, und

(iii) die aktuellen Pixel in Feldern ähnlicher Größe und benachbart zu dem Feld bester Ausrichtung.

**7.** Gerät zur digitalen Bildverarbeitung nach einem der vorhergehenden Ansprüche, bei welchem in jeder Verarbeitungszelle (40) ein Signalspeicher (48) oder eine andere Verzögerungseinrichtung vorgesehen ist, um auf die partiellen Korrelationsdaten, die der stromabwärtigen Verarbeitungszelle (40) zugeführt werden, eine vorbestimmte Verzögerung aufzuprägen.

**8.** Gerät zur digitalen Bildverarbeitung nach einem der vorhergehenden Ansprüche, bei welchem die Werte der Bildeingabepixel im Feld der besten Ausrichtung benutzt werden, um die Werte der entsprechenden Pixel des Bezugsbildes zu modifizieren.

**9.** Gerät zur digitalen Bildverarbeitung nach Anspruch 8, bei welchem durch die Modifikation die Werte der Pixel des Bezugsbildes gemäß den Werten der entsprechenden Pixel im bestausgerichteten Feld und gemäß einem jeweiligen Bezugsbewertungswert für jedes Pixel modifiziert werden.

**10.** Gerät zur digitalen Bildverarbeitung nach Anspruch 8, bei welchem jeder Bezugsbewertungswert unter Benutzung der absoluten Differenz zwischen den Pixelwerten des Bezugsbildes und den Pixelwerten des Feldes mit der besten Ausrichtung bestimmt werden.

**Revendications**

**1.** Appareil de traitement numérique d'image (10) pour corréler une image de référence avec une image d'entrée à une pluralité de positions de corrélation et pour déterminer la position du meilleur alignement de celles-ci, comportant

des moyens d'entrée de données d'image (12) pour recevoir des données numériques représentant les valeurs de pixel de ladite image d'entrée,
une cellule de traitement (40) reliée auxdits moyens d'entrée d'image (12) pour recevoir des données depuis ceux-ci,
des moyens (50, 52) pour mémoriser une valeur de référence respective représentant la valeur d'un pixel associé de l'image de référence, et

des moyens pour effectuer une opération de corrélation sur la valeur de référence mémorisée dans la cellule de traitement (40) et les données d'image d'entrée délivrées dans la cellule de traitement (40) afin de déterminer des données de corrélation partielle,

caractérisé par une série de cellules de traitement (40) reliées les unes aux autres et auxdits moyens d'entrée d'image (12) pour recevoir des données depuis ceux-ci substantiellement en parallèle, chacune des cellules de traitement incluant :

des moyens de sortie de données de corrélation partielle pour émettre des données de corrélation partielle, chaque cellule de traitement (40) située en aval de la première cellule de la série incluant des moyens d'entrée de données de corrélation partielle pour recevoir les données de corrélation partielle depuis la cellule précédente, et la dernière cellule de traitement (40) de la série comportant des moyens de sortie de données de corrélation pour émettre un flux de données de corrélation numériques indiquant le degré de corrélation à chacune des positions de corrélation.

2. Appareil de traitement numérique d'image selon la revendication 1, comprenant des moyens sensibles audit flux de données de corrélation numériques pour déterminer la position du meilleur alignement de l'image de référence et de l'image d'entrée.

3. Appareil de traitement numérique d'image selon la revendication 1 ou 2, dans lequel l'opération de corrélation dans chaque cellule de traitement (40) comprend la détermination de la différence absolue entre la valeur de données d'image entrée dans cette cellule (40) et la valeur de référence de cette cellule (40).

4. Appareil de traitement numérique d'image selon la revendication 3, dans lequel ladite opération de corrélation comporte en outre une combinaison ou une sommation de ladite différence absolue et des données de corrélation partielle reçues à partir de la cellule de traitement (40) située en amont, pour former des données de corrélation partielle à envoyer à la cellule de traitement (40) située en aval.

5. Appareil de traitement numérique d'image selon la revendication 3 ou 4, dans lequel chaque cellule de traitement (40) comporte des moyens pour mémoriser une valeur de pondération de corrélation respective associée à ladite cellule (40), et des moyens pour pondérer ou multiplier ladite valeur absolue à l'aide de ladite valeur de pondération de corrélation.

6. Appareil de traitement numérique d'image selon la revendication 5, comportant des moyens pour modifier chacune des valeurs de pondération de corrélation respectives des cellules (40) conformément à au moins un élément parmi les suivants :

(i) les valeurs courantes des pixels dans la matrice du meilleur alignement définie par la partie de l'image correspondant à l'image de référence à la position du meilleur alignement,
(ii) les pixels de l'image de référence, et
(iii) les pixels courants des matrices de taille similaire et adjacentes à la matrice du meilleur alignement.

7. Appareil de traitement numérique d'image selon l'une quelconque des revendications précédentes, dans lequel chaque cellule de traitement (40) comporte des moyens de verrouillage (48) ou d'autres moyens à retard pour appliquer un retard prédéterminé aux données de corrélation partielle délivrées dans la cellule de traitement en aval (40).

8. Appareil de traitement numérique d'image selon l'une quelconque des revendications précédentes, dans lequel les valeurs des pixels d'image d'entrée de la matrice du meilleur alignement sont utilisées pour modifier les valeurs des pixels correspondants de l'image de référence.

9. Appareil de traitement numérique d'image selon la revendication 8, dans lequel ladite modification inclut la modification des valeurs des pixels de l'image de référence conformément aux valeurs des pixels correspondants de la matrice du meilleur alignement, et conformément à une valeur de pondération de référence respective pour chaque pixel.

10. Appareil de traitement numérique d'image selon la revendication 8, dans lequel chaque valeur de pondération de référence est déterminée en utilisant la différence absolue entre les valeurs de pixel de l'image de référence et les valeurs de pixel de la matrice du meilleur alignement.

# Fig.1.

# Fig.2.

OUTPUT

Fig.3.

Fig.4.

## Fig.5.

ENABLES

RAM ADDRESS
AND CONTROL
GENERATOR

ADDRESS

CONTROL

EP 0 704 711 B1

## Fig.5 (Cont).

CBI<19:0>

32 BASIC PROCESSING CELLS

32 BASIC PROCESSING CELLS

VIDEO DISTRIBUTION BUFFERING

VID<7:0>
PIX_CLK
CCLK
LS/

MC<1:0>

CS/
WE/
OE/

RESET/
TRISTATE/
TEST/
LAST_
ASIC/

VCC
GND

DATA IN AND CONTROL SYNC PLUS ENABLE GENERATION

MULTIPLEXER CONTROL INTERMEDIATE REGISTER

EP 0 704 711 B1

Fig.5 (Cont 1).

MINIMUM DETECTOR

CM/

CBO<19:0>

REFERENCE INTERMEDIATE REGISTER

ACwt INTERMEDIATE REGISTER

MULTIPLEXER

MULTIPLEXER

LINE STORE RAM

LINE STORE RAM

C0
C1
C2
C3

## Fig.6.

CORRELATION
MIN
LOCATION

48

16

32

96

## Fig.7.

REFERENCE AREA

SEARCH AREA

32

16

16

31

32

63

CORRELATION SURFACE

## Fig.8a.

FFOV

CM

## Fig.8b.

FFOV

CM

# Fig.9.

VIDEO_DATA

OE

68

58

ASIC1  ASIC2 - - - ASIC8

FINCLK → FINCLK
→ nDATA_VALID
→ VD_IN                CM_OUT →

→ WT_AC_IN        WT_AC_OUT →

56

60

PRIMARY_DATA ↔

PRIMARY_DATA →

20

EP 0 704 711 B1

# Fig.9 (Cont).

CORR_MIN

64

62

nOE

68

nOE

68

nDATA_VALID

nDATA_VALID

FIELD_ADDRESS

66

EP 0 704 711 B1